# EUROPEAN PATENT APPLICATION

(11) **EP 1 842 579 A1**
(43) Date of publication of application: **10.10.2007**
(21) Application number: 05809764.3
(22) Date of filing: 24.11.2005
(51) Int. Cl.: B01D 53/68, B01D 53/46, B01J 20/04

(54) **METHOD FOR REMOVING HALOGEN BASED GAS AND AGENT FOR REMOVING HALOGEN BASED GAS**

(30) Priority: 13.12.2004 JP 2004360414
(71) Applicant: Asahi Glass Company, Limited, Chiyoda-ku, Tokyo 100-8405 (JP)
(72) Inventor: SAKURAI, Shigeru, c/o Asahi Glass Company, Limited, Tokyo; 1008405 (JP); HIRANO, Hachirou, c/o Asahi Glass Company, Limited, Chiba; 2908566 (JP); ARIMA, Hisakazu, c/o Asahi Glass Company, Limited, Ibaraki; 3140195 (JP)
(74) Representative: Perrey, Ralf
(86) International application number: PCT/JP2005/021611
(87) International publication number: WO 2006/064645

(57) **Abstract**

To provide a method for removing a halogen series gas, which has high capability of treating a halogen series gas, can prevent ignition of an adsorbing agent, is free from formation of carbon dioxide and can reduce generation of wastes, and a removing agent to be used for the method. The method for removing a halogen series gas comprises bringing a gas comprising at least one halogen series gas selected from the group consisting of F₂, Cl₂, Br₂, I₂ and a compound which undergoes hydrolysis to form a hydrogen halide or hypohalogenous acid into contact with a granulated product comprising from 80 to 99.9 mass% of an alkali metal base and from 0.1 to 20 mass% of a thiosulfate based on the total mass of the granulated product, in the presence of water, to remove the halogen series gas.

## Description

### TECHNICAL FIELD

The present invention relates to a method for removing a halogen series gas contained in an exhaust gas formed in e.g. a process for producing semiconductors, and an agent for removing a halogen series gas.

### BACKGROUND ART

A dry etching exhaust gas, a CVD chamber exhaust gas containing SiH₄ (silane) gas as the main component, or an ion implantation or doping exhaust gas containing AsH₃ (arsine) or PH₃ (phosphine) as the main component, contains at least one halogen series gas selected from the group consisting of F₂, Cl₂, Br₂, I₂ and a compound which undergoes hydrolysis to form a hydrogen halide or hypohalogenous acid (hereinafter referred to as the present halogen series gas) together with a carrier gas such as N₂ (nitrogen) gas.

Heretofore, as a method for treating such a present halogen series gas, it has been common to employ a dry system treating method using an activated carbon adsorbent as a packing material in order to make an apparatus small or to simplify the operation and maintenance of the apparatus. However, there have been various problems such as a danger of fire by heat of adsorption of a gas to be treated, formation of carbon monoxide by a reaction of activated carbon with the gas to be treated, degradation of working environment at the time of changing the packing material due to an odor of the present halogen series gas desorbed from the adsorbent used, and treatment of a solid waste, and it has been desired to solve such problems. Further, it has been desired to further increase the adsorption capacity of the packing material in order to reduce the frequency of the operation to change the packing material. These problems have been remarkable particularly at the time of removing Cl₂ gas or a mixed gas of Cl₂ and BCl₃ (boron trichloride) which is frequently used.

In a removal method by means of a solid base only as disclosed in Patent Document 1, when the gas to be treated was F₂, Cl₂, Br₂, I₂, the neutralization reaction was inhibited by formation of hypohalogenous acid, whereby the treating capacity was deteriorated.

Further, Patent Document 2 discloses a removal method using a removing agent made of a mixture of a solid base and activated carbon. This method was one which is able to substantially solve the above-mentioned problems such as a danger of fire due to heat of adsorption of the gas to be treated, degradation of working environment at the time of changing the packing material due to an odor of the present halogen series gas desorbed from the adsorbent used, and treatment of a solid waste as well as the requirement to increase the adsorption capacity of the packing material in order to reduce the frequency of the operation to change the packing material. However, since the removal agent contains activated carbon, it still has a drawback that carbon monoxide will be formed by a reaction of the activated carbon with the present halogen series gas.

On the other hand, Patent Document 3 discloses a removing agent comprising slaked lime and a thiosulfate. However, the slaked lime accompanies heat generational at the time of the neutralization reaction. Further, the slaked lime has a poor reaction efficiency with the present halogen series gas, and a substantial amount of unreacted slaked lime will remain. Further, slaked lime has a poor solubility in water, and during treatment after the use, it is difficult to dissolve it in water and reduce the volume for disposal.
Patent Document 1: U.S. Patent 6,685,901
Patent Document 2: W03/033115
Patent Document 3: JP-A-2001-17831

### DISCLOSURE OF THE INVENTION

### OBJECT TO BE ACCOMPLISHED BY THE INVENTION

It is an object of the present invention to provide a method for removing the halogen series gas, which has high capability of treating the present halogen series gas, can suppress heat generation at the time of adsorption of the present halogen series gas, is free from formation of carbon monoxide by a reaction with the present halogen series gas and is capable of reducing formation of a solid waste, and a removing agent to be used for the method, and thereby improve e.g. the process for producing semiconductors.

### MEANS TO ACCOMPLISH THE OBJECT

The present invention provides a method for removing a halogen series gas, which comprises bringing a gas comprising at least one halogen series gas selected from the group consisting of F₂, Cl₂, Br₂, I₂ and a compound which undergoes hydrolysis to form a hydrogen halide or hypohalogenous acid into contact with a granulated product (hereinafter referred to as the present granulated product) comprising from 80 to 99.9 mass% of an alkali metal base and from 0.1 to 20 mass% of a thiosulfate based on the total mass of the granulated product, in the presence of water, to remove the halogen series gas.

Further, the present invention provides an agent for removing a halogen series gas, which comprises a granulated product comprising from 80 to 99.9 mass% of an alkali metal base and from 0.1 to 20 mass% of a thiosulfate based on the total mass of the granulated product.

In the present invention, the present granulated product contains an alkali metal base, whereby as compared with an alkaline earth metal base, the capacity for treatment of the present halogen series gas can be improved, and the present halogen series gas can be removed constantly and effectively. In this specification, the alkali metal base is meant for an alkali metal salt which can be reacted with a hydrogen halide, i.e. a basic alkali metal salt. Further, the present granulated product contains a thiosulfate, which undergoes an oxidation-reduction reaction with the present halogen series gas in the presence of water, to form an acid. It is considered that the formed acid reacts with a hypohalogenite formed from the present halogen series gas, whereby the reaction for removing the present halogen series gas will be promoted as a whole.

### EFFECTS OF THE INVENTION

The granulated product in the present invention has high capability of treating the present halogen series gas, suppresses heat generation at the time of adsorption of the present halogen series gas, is free from forming carbon monoxide by a reaction with the present halogen series gas and can reduce generation of a solid waste. The method for removing a halogen series gas of the present invention is capable of improving the performance of a semiconductor production apparatus which is required to maintain high operation efficiency of the apparatus and to use many types of gases and thus is capable of substantially contributing to improvement of the production of semiconductors.

### BEST MODE FOR CARRYING OUT THE INVENTION

In the present invention, the gas to be treated by the present granulated product is one comprising at least one halogen series gas (the present halogen series gas) selected from the group consisting of F₂, Cl₂, Br₂, I₂ and a compound which undergoes hydrolysis to form a hydrogen halide or hypohalogenous acid. The gas comprising the present halogen series gas may, for example, be a dry etching exhaust gas, a CVD chamber exhaust gas, an ion implantation exhaust gas or a doping exhaust gas formed in a semiconductor production process.

The compound which undergoes hydrolysis to form a hydrogen halide or hypohalogenous acid may, for example, be SiF₄ (silicon tetrafluoride), SiH₂Cl₂ (dichlorosilane), SiCl₄ (silicon tetrachloride), AsCl₃ (arsenic dichloride), PCl₃ (phosphorus trichloride), BF₃ (boron trifluoride), BCl₃ (boron trichloride), BBr₃ (boron tribromide), WF₆ (tungsten hexafluoride), ClF₃ (chlorine trifluoride) or COF₂ (carbonyl fluoride). In addition, for example, COCl₂ (phosgene) which undergoes hydrolysis with water may also be removed, although the removal performance may be low as compared with the above-mentioned gases.

The compound which undergoes hydrolysis to form a hydrogen halide or hypohalogenous acid, undergoes hydrolysis to form a hydrogen halide such as HF, HCl, HBr or HI, or a hypohalogenous acid such as HFO, HClO, HBrO or HIO. Such a compound may be hydrolyzed by e.g. water contained in the gas to be treated, water in a slight amount deposited on the present granulated product, water formed by desorption from a hydrate of an alkali metal base and/or thiosulfate, or water as a reaction product of the present granulated product.

In the present invention, the temperature of the present halogen series gas is preferably from 0 to 100°C, whereby the removal treatment can efficiently be carried out. If the temperature of the present halogen series gas is lower than 0°C, the reaction rate of the present granulated product with the present halogen series gas is likely to be low. Further, when the temperature of the present halogen series gas is at most 100°C, it is not required to make the apparatus such as the packed column to be made of an expensive heat resistant material or to have an expensive structure, whereby the operation and the apparatus, etc. can be simplified.

In the present invention, the alkali metal base is preferably at least one member selected from the group consisting of a hydrogencarbonate, a carbonate, an oxide and a hydroxide, of an alkali metal. The hydrogencarbonate may, for example, be sodium hydrogencarbonate or potassium hydrogencarbonate; the carbonate may, for example, be sodium carbonate, sodium sesquicarbonate (Na₂CO₃·NaHCO₃·2H₂O) or potassium carbonate; the oxide may, for example, be sodium oxide or potassium oxide; and the hydroxide may, for example, be sodium hydroxide or potassium hydroxide. Another alkali metal base may, for example, be sodium silicate, soda lime, sodium tripolyphosphate or sodium citrate. Here, sodium carbonate or sodium sesquicarbonate may be used irrespective of whether it is natural or synthetic, and sodium carbonate may be used irrespective of whether it is light (light soda ash) or heavy (heavy ash).

In a case where the alkali metal base is a carbonate or a hydrogen carbonate, carbon dioxide gas will be formed at the time of its reaction with the present halogen series gas to form pores on the surface of the removing agent, whereby the reaction efficiency can be made high, and the capacity for treating the present halogen series gas can be made large, such being desirable.

Further, in a case where the alkali metal base is a hydrogencarbonate, the hydrogencarbonate has a fire extinguishing property, just like sodium hydrogencarbonate is used as a fire extinguishing agent, and further, it has a substantial merit such that the neutralization reaction of a hydrogencarbonate is usually an endothermic reaction, whereby it does not generate a heat like slaked lime, and it is free from a danger of firing as compared with the adsorption operation by activated carbon. Among hydrogencarbonates, sodium hydrogencarbonate is particularly preferred since it is suitable as a material for industrial production, such that it has no hygroscopicity and is easy in the production and storage as a granulated product and available in a large quantity at a low cost. On the other hand, in a case where it is not desirable to use a sodium salt, it is preferred to use potassium hydrogencarbonate.

In the present invention, the thiosulfate may, for example, be sodium thiosulfate, potassium thiosulfate or ammonium thiosulfate. Among thiosulfates, sodium thiosulfate is preferred, since it is industrially readily available at a low cost. Further, a pentahydrate is preferred to an anhydride, since water required for the reaction for removing the present halogen series gas can thereby readily be supplied.

In the present invention, the alkali metal base and/or thiosulfate is preferably a hydrate. In the presence of water derived from such a hydrate, it is possible to form an acidic gas such as HF, HCl, HBr or HI from the present halogen series gas without addition of a new apparatus or packing material, and such an acidic gas will be used for decomposition of a hypohalogenite generated from the present halogen series gas. An example of the hydrate of an alkali metal base may be sodium carbonate monohydrate, sodium carbonate heptahydrate or sodium carbonate decahydrate, and an example of the hydrate of a thiosulfate may be sodium thiosulfate pentahydrate.

In the granulated product, the content of the alkali metal base is from 80 to 99.9 mass%, and the content of the thiosulfate is from 0.1 to 20 mass%. If the content of the thiosulfate in the present granulated product is less than 0.1 mass%, the after-mentioned effect by the thiosulfate contained can hardly be obtainable, such being undesirable, and if it exceeds 20 mass%, the capacity for treating the present halogen series gas tends to be low, such being also undesirable. The content of the thiosulfate in the present granulated product is particularly preferably from 5 to 10 mass%.

In the present invention, in a case where the present halogen series gas is F₂, Cl₂, Br₂ or I₂, by incorporating the alkali metal base and the thiosulfate in the present granulated product, it is possible to remove a larger amount of the present halogen series gas than a case where the same amount of the alkali metal base is used in the presence of water. The thiosulfate in the present granulated product undergoes an oxidation-reduction reaction with F₂, Cl₂, Br₂ or I₂ in the presence of water to form an acid. It is considered that the formed acid and the alkali metal base undergo a neutralization reaction, whereby the reaction is accelerated. The reaction mechanism assumed for this mechanism will be described below in a case where Cl₂ is used as the halogen, sodium hydrogencarbonate is used as the alkali metal base, and sodium thiosulfate is used as the thiosulfate.

By the reaction of sodium hydrogencarbonate (NaHCO₃) and Cl₂ in the present granulated product, sodium hypochlorite (NaClO) and sodium chloride (NaCl) are considered to be formed by the formula (1). Here, in order to let the reaction proceed to the right-hand side of the formula (1), it is necessary to minimize sodium hypochlorite on the right-hand side. For such a purpose, the formed sodium hypochlorite is required to be sequentially decomposed. Namely, the present inventors consider that the decomposition of sodium hypochlorite is the rate-controlling factor for this entire reaction.

On the other hand, sodium thiosulfate will react with Cl₂ in the presence of water to form sodium chloride (NaCl) and hydrogen chloride (HCl) (the formula (2)). Water required for the reaction of the formula (2) may be supplied as water included in the gas to be treated, a slight amount of water deposited on the present granulated product, or water formed by desorption of a hydrate of an alkali metal base and/or thiosulfate. Here, it is preferred to use a pentahydrate as sodium thiosulfate, since water can thereby easily be supplied. Further, the anhydride and the pentahydrate may be used as mixed in an optional ratio. After initiation of the reaction, water will be supplied also as a reaction product of the present granulated product (the formula (1), the formula (3-1), the formula (3-2)). An acid such as hydrogen chloride formed by the formula (2) is considered to accelerate decomposition of sodium hypochlorite formed at the right-hand side of the formula (1) (the formula (3-1), the formula (3-2)).

2NaHCO₃+Cl₂+NaClO+NaCl+H₂O+2CO₂ (1)

Na₂S₂O₃+4Cl₂+5H₂O→2NaCl+2H₂SO₄+6HCl (2)

2NaClO+2HCl→2NaCl+Cl₂-H₂O+ (1/2) O₂ (3 -1)

2NaClO+H₂SO₄→Na₂SO₄+Cl₂+H₂O+(1/2)O₂ (3-2)

Among the acids formed by the formula (2), excess acids not consumed by the formulae (3-1) and (3-2) will be neutralized by the formulae (4-1) and (4-2).

HCl+NaHCO₃→NaCl+H₂O+CO₂ (4-1)

H₂SO₄+2NaHCO₃→Na₂SO₄+2H₂O+2CO₂ (4-2)

The present inventors consider that in the present invention, sodium hypochlorite is readily decomposed by the formulae (3-1) and (3-2), and as a whole, Cl₂ is removed mainly by the formula (5). It is considered that also in a case where the halogen is F₂, Br₂ or I₂, hypohalogenite will similarly be formed, and its decomposition is accelerated by a hydrogen halide.

Na₂S₂O₃+20NaHCO₃+9Cl₂→

18NaCl+2Na₂SO₄+10H₂O+20CO₂+(5/2)O₂ (5)

The present granulated product preferably contains from 1 to 20 mass% of a porous material made of an inorganic oxide (hereinafter referred to simply as the porous material). By incorporating the porous material to the present granulated product, it is possible to guide the present halogen series gas and the hydrogen halide gas formed by the above reaction formula into the interior of the present granulated material and to react them with the entirety of the present granulated product. If the content of the porous material is less than 1 mass%, the effect of such incorporation may not sufficiently be obtained, and if the content exceeds 20 mass%, the proportion of the effective component of the present granulated product tends to be small, and the reaction efficiency tends to be low, such being undesirable.

Further, if excess water is absorbed among water formed by the above reactions, particles of the present granulated product are likely to mutually adhere one another by dissolution. If such granulated product is packed in a column, it tends to be difficult to take it out. The porous material to be incorporated in order to prevent or lessen such difficulty preferably has an ability to adsorb water.

The porous material preferably has an average pore radius of from 0.1 to 50 nm and a pore volume of from 0.005 to 0.05 cm³/g. The porous material serves to let the present halogen series gas and the hydrogen halide gas formed by the above reaction reach the interior of the present granulated product and to increase the specific surface area for the present granulated product to react. It is thereby possible to improve the reaction rate and the reaction efficiency of the present granulated product with the present halogen series gas and the hydrogen halide gas formed by the above reaction formula. If the average pore radius and pore volume of the porous material are smaller than the above-mentioned values, diffusion of the gas tends to be inadequate, and the reaction rate and the reaction efficiency tend to be low, such being undesirable. Further, if the average pore radius and pore volume are larger than the above-mentioned values, the hardness of the present granulated product tends to be low and dusting is likely to take place, such being undesirable. Particularly preferably, the porous material has an average pore radius of from 0.2 to 50 nm and a pore volume of from 0.01 to 0.2 cm³/g. In this specification, the average pore radius is meant for a pore radius (nm) at the point where an accumulated pore volume becomes 50%, when the pore volume is measured by a nitrogen adsorption method using a gas adsorption pore distribution analyzer, and an accumulation curve is obtained by taking the total pore volume as 100%.

Further, it is also preferred to incorporate clay to the present granulated product, since the clay has a layered structure and thus provides spaces in the present granulated product, whereby like the porous material, it makes it easy to guide the gas to the interior of the present granulated product. If the content of such clay is less than 1 mass%, no improvement in the effect will be observed, and if the content exceeds 20 mass%, the hardness of the present granulated product is likely to be low. When the porous material and the clay are used in combination, their total amount is preferably at most 20 mass%.

The ratio of the alkali metal base to the porous material or clay in the present granulated product is optimized depending on the composition, concentration, pressure, temperature, treating time, etc. of the present halogen series gas. When the concentration, pressure and temperature of the present halogen series gas are low, or when the contact time of the present granulated product with the present halogen series gas is short, it is preferred to increase the content of the porous material.

The porous material may, for example, be natural or synthetic zeolite, silica gel, alumina, porous glass, diatomaceous earth or porous ceramics. The clay may, for example, be activated clay, acid clay, pearlite, a layered silicate such as chrysotile or bentonite, sepiolite, palygorskite, allophane, imogolite, an acid-treated product of antigorite, or a synthetic layered compound. As the porous material, silica gel, or natural or synthetic zeolite, is particularly preferred, and as the clay, activated clay or bentonite is particularly preferred, since they are industrially readily available at a low cost.

In the present invention, the alkali metal base preferably has an average particle diameter of primary particles being from 1 to 500 µm. The thiosulfate may be used in the form of a crystal product having a diameter of from about 1 to 10 mm, which is readily available. However, it is preferred to use one pulverized to from 1 to 500 µm, since it is thereby possible to uniformly mix it in a step of mixing starting materials prior to forming the granulated product. When the porous material and clay are to be used, the average particle diameter of such primary particles is preferably from 1 to 500 µm. If the average particle diameter of the primary particles is less than 1 µm, the flowability tends to be poor, and the handling or the like tends to be difficult. On the other hand, if the average particle diameter of the primary particles exceeds 500 µm, uniform mixing of the alkali metal base with the porous material or clay in the granulated product tends to be difficult. Further, industrial production of a granulated product tends to be difficult, and the costs tend to be high, such being undesirable. Here, the primary particles are meant for single crystals of the alkali metal base, crystals or powder of the thiosulfate, a powder of the porous material, or a powder of the clay.

In this specification, with respect to a powder or a granulated product having an average particle diameter of at least 70 µm, "the average particle size" means a particle size at the point where an accumulated mass becomes 50%, when mass amounts remaining on the respective sieves and the lowest bottom tray in a sieving method are measured, and an accumulation curve is prepared by taking the total mass amount as 100%. On the other hand, "the average particle diameter" of the one having an average particle diameter of less than 70 µm is a particle diameter at the point where an accumulated volume becomes 50% when the measurement is carried out by a laser diffraction scattering type particle size distribution measuring apparatus, and an accumulation curve is prepared by taking the total volume as 100%.

The average particle diameter of the present granulated product is preferably from 0.5 to 20 mm. It is thereby possible to use a conventional packed type apparatus for activated carbon or zeolite without introducing a new apparatus. If the average particle diameter of the present granulated product is less than 0.5 µm, the pressure loss caused by passing the present halogen series gas as a gas to be treated through a packed bed of the present granulated product tends to be high, whereby an additional aspirating equipment such as a vacuum pump may be required, or the required electric power tends to increase such being undesirable. On the other hand, if the average particle diameter exceeds 20 mm, the contact area between the present halogen series gas and the external surface of the present granulated product tends to be small, whereby the performance for removal of the present halogen series gas by the present granulated product tends to be low such being undesirable. The average particle diameter of the present granulated product is particularly preferably from 0.5 to 10 mm.

In order to improve the performance for removal of the present halogen series gas, if the particle size distribution of the packing material in a packed bed of a removing apparatus is adjusted so that the granulated product having a particle diameter of at most 4 mm be at least 90% by mass, and the granulated product having a particle diameter of at most 1.0 mm be at most 10% by mass, the structure of the packed bed will be uniform, and a higher performance for removal can be accomplished, since the theoretical number of plates will be improved as the structure of the packed column becomes uniform. If the granulated product having a particle diameter of at most 4 mm is less than 90%, the packed structure of the packed bed tends to be non-uniform, and not only that, with such a large granulated product, the present halogen series gas tends to hardly penetrate into the interior, whereby the reaction rate of the granulated product is likely to be low. Further, if the granulated product having a particle diameter of at most 1.0 mm is more than 10% by mass, such small particles are likely to enter into spaces of other particles, whereby the packed structure of the packed bed tends to be non-uniform, and they tend to hinder a uniform flow of the gas, whereby the reaction rate of the present granulated product is likely to be low.

A binder may be mixed with the present granulated product. The binder may be optionally selected from known binders such as water glass (concentrated sodium silicate aqueous solution), sodium silicate, CMC (carboxyl methylcellulose) or PVA (polyvinyl alcohol).

The amount of the binder mixed is preferably from 0.01 to 10 mass% to the total mass of the present granulated product. If the amount of the binder is less than 0.01 mass%, the effect for improving the hardness by the binder can not be expected, and it becomes meaningless to use the binder. On the other hand, if the amount exceeds 10 mass%, the amount of the effective component in the reaction is likely to be low such being undesirable.

In the present granulated product, the total amount of the alkali metal base and the thiosulfate is preferably at least 80 mass%, particularly preferably at least 85 mass%. If the total amount of the alkali metal base and the thiosulfate is less than 80 mass%, the capacity for treating the gas as an agent for removing the present halogen series gas tends to be low, and the frequency for change of the removing agent in the packed bed is likely to be high such being undesirable.

The present granulated product may be obtained by either a dry method or a wet method. Further, the granulating method may, for example, be a compression-molding method, a rolling granulating method, an agitating granulating method, an extrusion molding method, a spray drying method or a fluidized bed method. A dry type compression-molding method such as a tableting method or a roll press method is preferred, since the process is simple in that no drying step is required, thus it is advantageous for industrial production, it is possible to obtain the present granulated product having high hardness without a binder, it is possible to increase the total amount of the alkali metal base and the thiosulfate, and it is free from deterioration in strength of the particles of the present granulated product due to deterioration of the binder by the present halogen series gas such being preferred. As a method for adjusting the particle size distribution and the average particle diameter of the present granulated product in such a case, it is possible to employ a process which comprises molding by a dry type compression-molding machine, followed by rough pulverization and sieving.

Further, as another method for obtaining the present granulated product, a method may be mentioned wherein an alkali metal base and a thiosulfate, and, if necessary, a porous material and an aqueous binder such as CMC, and water, are kneaded, then molded by a wet type extrusion molding machine such as a pelletizer and then dried and sieved to adjust the particle size distribution and the average particle diameter. Otherwise, after molding by a pelletizer, the pellets may be formed into a spherical shape by a tumbling granulator such as a marumerizer to prevent formation of wearing portions (such as protrusions which may easily fall off from the present granulated product) of the present granulated product and to increase the density when packed into the packed bed. This can be achieved also by repeating sieving plural times. By the sieving plural times, it is possible to narrow the particle size distribution of the present granulated product and to make the packed structure uniform when packed into the packed bed. Thus, the theoretical number of plates of the packed bed can be improved, whereby the capability for treating the present halogen series gas can further be increased, such being preferred. As another granulating method, particularly when sodium thiosulfate pentahydrate is selected, since its melting point is 48°C, a method may be mentioned wherein a mixture of starting materials is heated to at least 48°C, so that granulation can be carried out by letting sodium thiosulfate itself function as a binder.

As a method for evaluation of the strength of the present granulated product, hardness is employed. The hardness is a force required to compress and crush one particle by applying a vertical force thereto from the upper position. Since the hardness varies depending on the particle diameter even if the same material is employed, it is necessary to measure the hardness after adjusting the particles by e.g. sieving. When the present granulated product has an average particle diameter of from 0.5 to 20 mm, the respective particles are classified from 0.5 mm to gradually larger sizes for every 0.5 mm. For example, with respect to particles having an average particle diameter of at least 1.5 mm and less than 2.0 mm, they are sieved by using a sieve having an opening of 1.5 mm and a sieve having an opening of 2.0 mm to collect 20 particles remained on the sieve of 1.5 mm and passed through the sieve of 2.0 mm, and the hardness of the respective particles is measured, and their average value is employed as an evaluation standard for the particle strength.

The hardness of the present granulated product is preferably such that the average hardness of the granulated product having a particle diameter of at least 0.5 mm and less than 1.0 mm is at least 5 N, or the average hardness of a granulated product having a particle diameter of at least 1.0 mm and less than 1.5 mm is at least 15 N, or the average hardness of a granulated product having a particle diameter of at least 1.5 mm and less than 2.0 mm is at least 25 N, or the average hardness of a granulated product having a particle size of at least 2.0 mm is at least 5 N. If the hardness of particles of the present granulated product is low, when the present granulated product is used for a packed bed, it tends to be powdered during the packing or the reaction, and it may deposit in the pipings, clog drain gratings, be suctioned by a vacuum pump or increase the pressure loss when the gas to be treated is passed through the packed bed, thus presenting a trouble in the operation for removing the present halogen series gas. It is further preferred that in all of the above-mentioned particle diameter ranges, the particles respectively have values of at least the above-mentioned average hardness.

The present granulated product has a high bulk density and thus can make the packed mass amount in a column large, and thus it has a merit that treatment performance can be made high. The packed density of activated carbon which used to be employed is from 0.4 to 0.6 g/cm³. Whereas, the packed density of the present granulated product is at least 0.7 g/cm³, preferably at least 0.8 g/cm³, further preferably at least 0.9 g/cm³, and thus, the packed density per unit volume is high, and the amount for treatment of the present halogen series gas is large.

When the alkali metal base in present granulated product is sodium hydrogencarbonate or potassium hydrogencarbonate, it is water-soluble itself, and its reaction product with the present halogen series gas becomes a water-soluble salt in many cases. It is preferred that a water-soluble salt is formed, since after removing the present halogen series gas, a solid other than the porous material is mostly soluble in water, whereby a solid waste can be reduced substantially. Further, when the granulated product is dissolved in water, the porous material, etc. may be recovered by carrying out filtration and can be re-used as the case requires, thus contributing to recycling of the resource.

The alkali metal base in the present granulated product reacts with the present halogen series gas to form a non-volatile salt in the environment of its use. Therefore, at the time of changing the packing material, there will be no formation of a halogen odor or generation of a gas by desorption of the present halogen series gas as in the case of removal operation by adsorption with activated carbon only. Therefore, the working environment at the time of changing the packing material is remarkably improved, such is not only preferred from the viewpoint of the working safety of an operator, but also provides a merit that the removing equipment installed in the working place can be made smaller.

Further, the present granulated product may be used in combination with other removing agents. For example, depending upon the composition of the gas to be treated, it may be mixed with a granulated product of activated carbon or a granulated product of sodium hydrogencarbonate, or may be used as packed into a column of a removing apparatus in combination with a bed of a granulated product of activated carbon or a granulated product of sodium hydrogencarbonate. For example, when the majority of the present halogen series gas is hydrogen chloride, it is preferred to dispose a packed bed of a granulated product of sodium hydrogencarbonate at an upstream of the present halogen series gas, and a packed bed of the present granulated product at a downstream thereof.

### EXAMPLES

Now, the present invention will be described with reference to Examples (Examples 1 and 4) and Comparative Examples (Examples 2, 3 and 5). In these Examples, the hardness was measured by using Kiya system digital hardness meter KHT-20 Model (manufactured by Fujiwara Scientific Co.). Further, the hardness various depending upon the size of particles, and therefore it was measured with respect to particles having the particle diameters adjusted by sieving.

With respect to the average particle diameter, it was measured by using Microtrac FRA9220 (manufactured by NIKKISO CO., LTD.) with respect to particles having an average particle diameter of less than 70 µm, and it was measured by sieving with respect to particles having an average particle diameter of at least 70 µm. Further, the average pore radius and pore volume were measured by using an automatic surface area-measuring apparatus (tradename: Sorptmatic 1990, manufactured by AMCO Incorporated).

### EXAMPLE 1 (Example of the present invention)

8.8 kg of sodium hydrogencarbonate powder for a food additive (manufactured by Asahi Glass Company, Limited) having an average particle diameter of primary particles being 95 µm, was uniformly mixed with 0.5 kg of sodium thiosulfate pentahydrate being crystallized sugar-like crystals of about 4 mm x 8 mm and 0.2 kg of synthetic A-type zeolite (manufactured by Nippon Builder K.K.) having an average particle diameter of 2.0 µm, an average pore radius of 8.24 nm and a pore volume of 0.010 cm³/g, and the mixture was compression-molded under a linear pressure of 36.8 kN/cm by means of a roll press type compression-molding machine (tradename: Roller Compactor WP model, manufactured by Turbo Kogyo Co., Ltd., roll outer diameter: 230 mm, roll length: 80 mm) to obtain a flaky molded product of a mixture comprising sodium hydrogencarbonate, sodium thiosulfate pentahydrate and synthetic zeolite.

The obtained flaky molded product was roughly pulverized and granulated by a roll type pulverizing-granulating machine (tradename: Pulverizing Roll Granulator GRN-2521 model, manufactured by NIPPON GRANULATOR CO., LTD.). The pulverizers were set in two stages, whereby the rotary teeth pitch of the first stage was 14 mm, and that of the second stage was 4 mm. Then, the granulated particles were manually sieved by means of a double-decker set of metal mesh stainless steel standard sieves having an inner diameter of 200 mm and openings of 1.7 mm and 4.0 mm, respectively, and particles remained on the sieve of 1.7 mm was collected to obtain the present granulated product.

Then, 100 g of the granulated product was put on a set of metal mesh stainless steel standard sieves having an inner diameter of 200 mm and openings of 4.0 mm, 2.8 mm, 2.00 mm and 1.41 mm, respectively, overlaid, and a bottom tray was placed at the bottom. Then, it was shaked by a low tap shaker type sieve-shaking machine (tradename: IIDA SIEVE SHAKER, manufactured by IIDA SEISAKUSHO, shaking number: 290 rotations/minute, hitting number: 165 times/minute) for 10 minutes, and then, the mass amounts of the present granulated product remaining on the respective standard sieves and the bottom tray were measured, and the cumulative total of the mass amounts passed through the respective openings were graphed, whereupon the particle diameter where the cumulative total of the mass amounts passed became 50%, was taken as the average particle diameter. The average particle diameter of the present granulated product was 1.8 mm. A granulated product having a particle diameter of at most 4 mm was 100% by mass, and a granulated product having a particle diameter of at most 1.41 mm was 4.8% by mass.

The hardness of the granulated product was measured by the above-mentioned hardness-measuring method. Namely, the granulated product having an average particle diameter of 1.8 mm thus obtained was sieved with sieves having openings of 1.4 mm, 2.0 mm and 2.8 mm, respectively, and the hardness of 20 particles of each particle size was measured, and the average value was obtained, whereby the average hardness of particles of from 1.4 to 2.0 mm was 14.9 N, that of from 2.0 to 2.8 mm was 56.9 N, and that of at least 2.8 mm was 81.3 N.

Then, the above granulated product was packed as a packing material into a reaction tube made of glass having an inner diameter of 30 mm and a length of 300 mm so that the packed height became 100 mm. The packed volume was 70.7 cm³, the packed mass was 83.5 g, and the packed density was 1.18 g/cm³. A gas having a composition comprising 3 vol% of Cl₂ and 97 vol% of N₂ was injected from the bottom at a temperature of 25°C under normal pressure at a flow rate of 424 cm³ per minute at a standard state (0°C, 0.10 MPa).

In order to observe breakthrough of the column with respect to the gas to be removed, a glass container containing litmus paper and iodine-potassium iodide/starch paper, was installed at the gas outlet of the packed glass reaction tube. However, no change was observed immediately after the initiation. Further, no carbon monoxide was detected.

Upon expiration of 177 minutes from the initiation of the treatment, breakthrough of the column was observed, and the litmus paper and the iodine/potassium iodide/starch paper underwent a color change. After the initiation to the end of the treatment, no carbon monoxide was detected. The packing material was taken out, whereby no powdering of the particles of the granulated product or no adherence of the particles of the present granulated product one another was observed, and there was substantially no generation of a chlorine odor, and the operation to take out the present granulated product was easy. Further, this packing material was dissolved in water, whereby components other than zeolite were dissolved, and this solution was subjected to filtration separation, whereby it was possible to reduce the solid waste. Further, the temperature of the packed bed was measured during the treatment of the mixed gas, and when the temperature of the exterior of the glass wall of the packed bed was measured, the maximum temperature was 35°C, and the minimum temperature was 23°C, which were substantially low as compared with the after-mentioned Example 3. The temperature was highest at the gas downstream side and lowest at the gas upstream side. Further, the locations of the maximum temperature and the minimum temperature moved towards the gas downstream side as the reaction advanced. This tendency was common also in the following Examples. The exterior temperature of the apparatus including the following Example 5 was from 23 to 26°C.

### EXAMPLE 2 (Comparative Example)

A test was carried out in the same manner as in Example 1 except that in Example 1, the granulated product was changed to sodium hydrogencarbonate only. The average particle diameter of the present granulated product was 2.1 mm. Particles having a particle diameter of at most 4 mm was 100% by mass, and particles having a particle diameter of at most 1.0 mm was 21.1% by mass. When it was packed so that the packed height became 100 mm, the packed volume was 70.7 cm³, the packed mass was 67 g, and the packed density was 0.92 g/cm³.

In the same manner as in Example 1, a glass container containing litmus paper and iodine/potassium iodide/starch paper, was installed at the gas outlet of the packed glass reactor tube. However, no change was observed immediately after the initiation.

Upon expiration of 5 minutes from the initiation of the treatment, breakthrough of the column was observed, and the litmus paper and the iodine/potassium iodide/starch paper underwent a color change. The packing material was taken out, whereby no powdering of the particles of the granulated product was observed, there was no adherence of the particles of the granulated product one another, and the chlorine odor was stronger than in Example 1 but substantially weaker than in Example 3. Further, water was added to this packing material, whereby almost all components were dissolved. The temperature of the packed bed was measured during the treatment of the mixed gas, whereby the maximum temperature was 25°C, and the minimum temperature was 20°C.

### EXAMPLE 3 (Comparative Example)

A test was carried out in the same manner as in Example 1 except that instead of the granulated product in Example 1, impregnated charcoal (tradename: Ryujoshirasagi XRC, manufactured by Takeda Chemical Industries, Ltd.) was used. The average particle diameter was 1.4 mm, particles having a particle diameter of at most 4 mm was 100% by mass, and particles having a particle diameter of at most 1.0 mm was 10.3% by mass. It was packed so that the packed height became 100 mm, whereby the packed volume was 70.7 cm³, the packed mass was 43 g, and the packed density was 0.61 g/cm³. The gas after the treatment was analyzed, whereby the chlorine gas detector did not react, and the Cl₂ concentration was not more than 0.01 vol ppm.

Upon expiration of 144 minutes from the initiation of the treatment, the Cl₂ concentration in the gas after the treatment increased, and the chlorine gas detector reacted. The packing material was taken out, whereby no powdering of the activated carbon was observed, and there was no adherence of the particles of activated carbon one another, but a strong chlorine odor was observed. Further, water was added to this packing material, whereby the packing material was not dissolved. Further, the temperature of the packed bed was measured during the treatment of the mixed gas, whereby remarkable heat generation was observed with the maximum temperature of 73°C. The minimum temperature was 25°C.

### EXAMPLE 4 (Example of the present invention)

The same granulated product as in Example 1 was packed in the same manner as in Examples 1 to 3 so that the packed height would be 100 mm. The packed volume was 70.7 cm, the packed mass was 82.0 g, and the packed density was 1.16 g/cm³. Here, a gas having a composition comprising 0.6 vol% of BCl₃, 2.4 vol% of Cl₂ and 97 vol% of N₂, was injected from the bottom at a temperature of 25°C under normal pressure at a flow rate of 424 cm³ per minute under a standard state (0°C, 0.10 MPa).

In the same manner as in Example 1, a glass container containing litmus paper and iodine/potassium iodide/starch paper, was installed at the gas outlet of the packed glass reaction tube. However, no change was observed immediately after the initiation. Further, no carbon monoxide was detected.

Upon expiration of 70 minutes from the initiation of the treatment, breakthrough of the column was observed, and the litmus paper and the iodine/potassium iodide/starch paper underwent a color change. After initiation to the end of the treatment, no carbon monoxide was detected. The packing material was take out, whereby no powdering of the particles of the granulated product, or no adherence of the particles of the present granulated product one another was observed, and there was substantially no generation of a chlorine odor, and the operation to take out the present granulated product was easy. Further, this packing material was dissolved in water, whereby components other than zeolite were dissolved, and the solution was subjected to filtration separation, whereby it was possible to reduce the solid waste. Further, the temperature of the packed bed was measured during the treatment of the mixed gas, and when the temperature of the exterior of the glass wall of the packed bed was measured, the maximum temperature was 43°C, and the minimum temperature was 24°C.

### EXAMPLE 5 (Comparative Example)

8.8 kg of slaked lime, 0.2 kg of bentonite and 0.5 kg of sodium thiosulfate pentahydrate were uniformed mixed, and in the same manner as in Example 1, molding, pulverization and sieving were carried out to obtain a granulated product. The average particle diameter of the present granulated product was 1.6 mm, particles having a particle diameter of at most 4 mm was 100% by mass, and particles having a particle diameter of 1.41 mm were 5.1% by mass.

When the granulated product was packed in the same manner as in Example 1 so that the packed height would be 100 mm, the packed volume was 70.7 cm³, the packed mass was 69.0 g and the packed density was 0.98 g/cm³. Here, a mixed gas comprising chlorine and nitrogen was injected in the same manner as in Example 1 to carry out treatment of the gas.

In the same manner as in Example 1, a glass container containing litmus paper and iodine/potassium iodide/starch paper, was installed at the gas outlet of the packed glass reaction tube. However, no change was observed immediately after the initiation. Further, no carbon monoxide was detected.

Upon expiration of 90 minutes from the initiation of the treatment, breakthrough the column was observed, and the litmus paper and the iodine/potassium iodide/starch paper underwent a color change. The packing material was taken out, whereby no powdering of the particles of the granulated product or no adherence of the particles of the present granulated product one another was observed, there was substantially no generation of a chlorine odor, and the operation to take out the present granulated product was easy. However, the slaked lime ash remaining as a non-reacted component was hardly soluble, and when the present granulated product was dissolved in water, the liquid became milky white and showed a strongly alkaline nature. Further, the temperature of the exterior of the wall of the packed bed was measured, whereby heat generation was observed with the maximum temperature of 58°C. The minimum temperature was 23°C.

### INDUSTRIAL APPLICABILITY

According to the present invention, an exhaust gas of e.g. dry etching, CVD or the like and the present halogen series gas of various processes can be removed. Further, the agent for removing the halogen series gas of the present invention is useful also for e.g. an emergency antitoxic agent or an absorbing tube for a gas mask.

The entire disclosure of Japanese Patent Application No. 2004-360414 filed on December 13, 2004 including specification, claims and summary is incorporated herein by reference in its entirety.

## Claims

1. A method for removing a halogen series gas, which comprises bringing a gas comprising at least one halogen series gas selected from the group consisting of F₂, Cl₂, Br₂, I₂ and a compound which undergoes hydrolysis to form a hydrogen halide or hypohalogenous acid into contact with a granulated product comprising from 80 to 99.9 mass% of an alkali metal base and from 0.1 to 20 mass% of a thiosulfate based on the total mass of the granulated product, in the presence of water, to remove the halogen series gas.

2. The method for removing a halogen series gas according to Claim 1, wherein the alkali metal base is at least one member selected from the group consisting of a hydrogencarbonate, a carbonate, an oxide and a hydroxide, of an alkali metal.

3. The method for removing a halogen series gas according to Claim 1 or 2, wherein the alkali metal base is sodium hydrogencarbonate and/or potassium hydrogencarbonate.

4. The method for removing a halogen series gas according to any one of Claims 1 to 3, wherein the alkali metal base and/or the thiosulfate is a hydrate.

5. The method for removing a halogen series gas according to any one of Claims 1 to 4, wherein the granulated product contains from 1 to 20 mass% of a porous material made of an inorganic oxide.

6. The method for removing a halogen series gas according to any one of Claims 1 to 5, wherein the granulated product contains at least 90% by mass of particles having a particle diameter of at most 4 mm and at most 10% by mass of particles having a particle diameter of at most 1.0 mm.

7. The method for removing a halogen series gas according to any one of Claims 1 to 6, wherein the granulated product is such that the average hardness of particles having a particle diameter of at least 1.4 mm and less than 2.0 mm is at least 5N, or the average hardness of particles having a particle diameter of at least 2.0 mm and less than 2.8 mm is at least 15N, or the average hardness of particles having a particle diameter of at least 2.8 mm is at least 25N.

8. The method for removing a halogen series gas according to any one of Claims 1 to 7, wherein the granulated product used, has a packing density of at least 0.7g/cm³.

9. A process for producing a semiconductor, which comprises removing a halogen series gas by the method for removing a halogen series gas as defined in any one of Claims 1 to 8.

10. An agent for removing a halogen series gas, which comprises a granulated product comprising from 80 to 99.9 mass% of an alkali metal base and from 0.1 to 20 mass% of a thiosulfate based on the total mass of the granulated product.
